## Europäisches Patentamt
## European Patent Office
## Office européen des brevets

(19)

(11) Veröffentlichungsnummer: **0 259 690**
**B1**

# EUROPÄISCHE PATENTSCHRIFT

(12)

(45) Veröffentlichungstag der Patentschrift:
**26.04.89**

(51) Int. Cl.⁴: **B62D 7/14,** B62D 9/00

(21) Anmeldenummer: **87112295.8**

(22) Anmeldetag: **25.08.87**

(54) **Hinterradlenkung für Kraftfahrzeuge.**

(30) Priorität: **04.09.86 DE 3630181**

(43) Veröffentlichungstag der Anmeldung:
**16.03.88 Patentblatt 88/11**

(45) Bekanntmachung des Hinweises auf die Patenterteilung:
**26.04.89 Patentblatt 89/17**

(84) Benannte Vertragsstaaten:
**DE ES FR GB IT SE**

(56) Entgegenhaltungen:
**DE-A- 3 121 196**
**DE-A- 3 230 036**
**DE-A- 3 230 256**
**DE-A- 3 337 311**
**US-A- 4 483 547**

(73) Patentinhaber: **BAYERISCHE MOTOREN WERKE AG,
Postfach 40 02 40 Petuelring 130 - AJ-31,
D-8000 München 40(DE)**

(72) Erfinder: **Matschinsky, Wolfgang, Korbinianplatz 9,
D-8000 München 40(DE)**

(74) Vertreter: **Dexheimer, Rolf, c/o Bayerische Motoren
Werke Aktiengesellschaft Postfach 40 02 40,
D-8000 München 40(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Hinterradlenkung für Kraftfahrzeuge nach dem Oberbegriff des Patentanspruchs 1.

Es ist bekannt, die Hinterräder von Kraftfahrzeugen beim Anlenken aus der Geradeausstellung im gleichen Drehsinn wie die Vorderräder einzuschlagen, um einen sofortigen Aufbau von Seitenkräften an den Hinterrädern und damit ein verbessertes Handling des Fahrzeuges zu erreichen. Ferner ist es bekannt, bei weiterwachsenden Lenkeinschlagwinkeln der Vorderräder den Einschlagwinkel der Hinterräder wieder zu reduzieren und im Bereich des maximalen Einschlagwinkels der Vorderräder ggf. sogar einen gegensinnigen Einschlagwinkel der Hinterräder zu erzeugen, um eine Verringerung des Wendekreisdurchmessers zu erhalten. Hierzu kann eine hydraulisch-elektrische Betätigung und Regelung der Hinterradlenkung, evtl. sogar abhängig vom jeweiligen Fahrzustand (DE-A 3 133 985) oder eine mechanische Verbindung Verwendung finden, häufig über eine längs im Fahrzeug angeordnete Drehwelle und Übersetzungsmechanismen (DE-A 3 230 036 oder 3 230 256).

Bei den mechanischen Hinterradlenkungen der vorausgesetzten Gattung (DE-A 3 121 196) ist in der Regel zwischen Vorderradlenkung und Drehwelle ein umlauffähiges Überzetzungsgetriebe – als Zahnrad- oder Kettengetriebe – erforderlich, da die Eingangswelle stets mehr als eine halbe Umdrehung je Seite ausführt. Dies bringt die Gefahr von unerwünschtem Spiel und von Geräuschen. Die Umsetzung der Drehbewegung der Drehwelle in seitliche Verschiebungen der Spurstangengelenke für die Hinterradlenkung kann über Kulissenführungen erfolgen (DE-A 3 230 036), was nicht ohne Führungsspiel möglich ist und zu einem Verlust an Präzision, zu Verschleiß und zu Klappergeräuschen führen kann. Werden zur Umsetzung der Drehbewegung in die seitliche Verschiebebewegungen der Spurstangengelenke Dreh- oder Kugelgelenke verwendet (DE-A 3 230 256, Fig. 31), so haftet dieser Bauart immer noch der Nachteil an, daß zum Herstellen einer gegensinnigen Lenkbewegung die Drehwelle in jeder Richtung um einen Winkel von mehr als 180° gedreht werden muß. Dies läßt es nicht zu, diese Welle bei im Bereich des Unterbodens auftretenden Einbauproblemen beispielsweise zu kröpfen.

Der Erfindung liegt die Aufgabe zugrunde, eine Hinterradlenkung der vorausgesetzten Bauart mit einer mechanischen Lenkverbindung zwischen Vorder- und Hinterrädern zu schaffen, die mit vergleichsweise geringen Drehwinkeln des Drehgliedes auskommt, so daß Zahnrad- oder Kettengetriebe überflüssig werden.

Diese Aufgabe wird erfindungsgemäß bei einer Hinterradlenkung nach dem Oberbegriff des Patentanspruchs 1 durch die im kennzeichnenden Teil dieses Patentanspruchs angegebenen Maßnahmen gelöst. Dank dieser Maßnahmen führt der Anlenkbereich der Lenkungsbetätigung der Hinterräder beim Verdrehen des Koppelgliedes zunächst eine seitliche Bewegung aus, die schon bei vergleichsweise geringen Drehwinkeln dieses Koppelgliedes diesen Anlenkbereich zu der zwischen den aufbauseitigen Anlenkpunkten liegenden Mittelebene des Fahrzeugs zurückführt und bei weiterem Verdrehen des Koppelgliedes sogar in die andere Richtung verlagert. Die Verdrehung des Koppelgliedes kann deutlich unter 90° je Seite liegen, so daß Zahnrad- oder Kettengetriebe überflüssig sind und einfache Hebelmechanismen zur Übertragung der Lenkbewegung zwischen Vorder- und Hinterrädern verwendet werden können. Die relativ kleinen Drehwinkel des Drehgliedes gestatten es schließlich, eine Drehwelle, die zum Verdrehen des Drehgliedes verwendet werden kann, bei Bedarf örtlich auszukröpfen, um beengten Raumverhältnissen unter dem Fahrzeugboden gerecht zu werden. Der Aufbau des gesamten Lenkmechanismus der Hinterräder aus Bauteilen, die durch Drehgelenke (z.B. Kugelgelenke) verbunden sind, erlaubt eine einfache und billige Herstellung, die trotzdem leichtgängig und spielfrei ist.

Die Erfindung und weitere vorteilhafte Einzelheiten der Erfindung sind im folgenden anhand eines in der Zeichnung dargestellten Ausführungsbeispiels näher erläutert. Es zeigen

Fig. 1 eine perspektivische Ansicht eines Ausführungsbeispiels der neuen Hinterradlenkung mit ihren wesentlichen Teilen;

Fig. 2 eine Ansicht in Richtung des Pfeiles II in Fig. 1 und

Fig. 3 ein Diagramm für die Querverschiebung der Spurstangen nach Fig. 2 in Abhängigkeit vom Drehwinkel des Koppelgliedes.

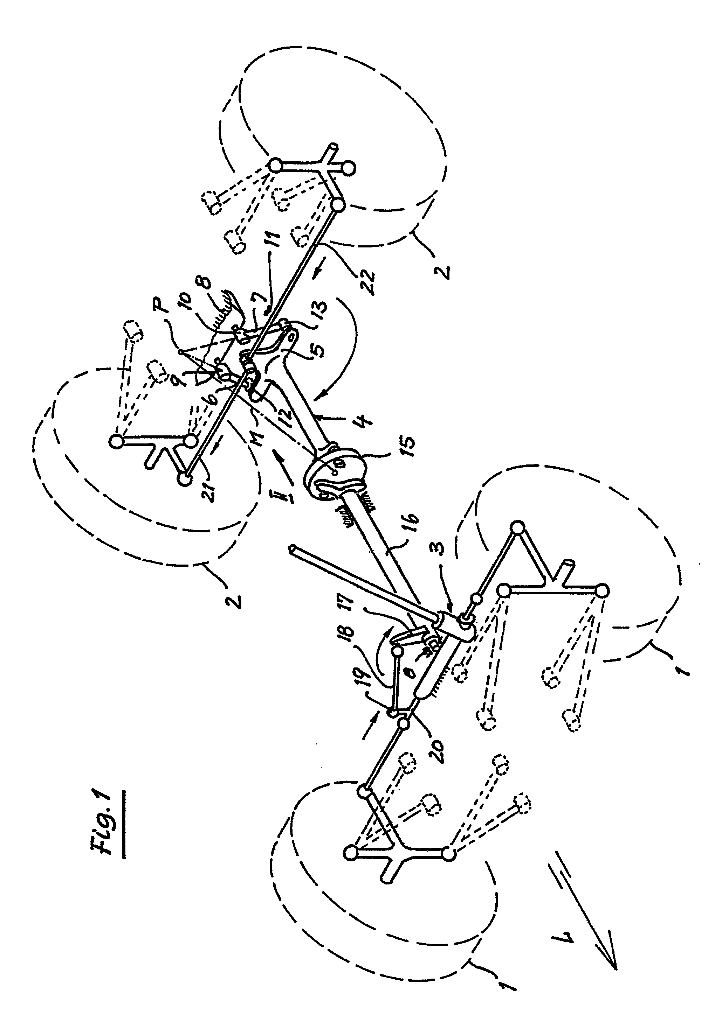

In Fig. 1 sind die vorderen lenkbaren Räder 1 und die hinteren, ebenfalls lenkbaren Räder 2 lediglich angedeutet. Zum Lenken der Vorderräder dient bei dem dargestellten Ausführungsbeispiel eine Zahnstangenlenkung 3, es könnte aber auch ein anderer Lenkmechanismus gewählt sein. Zur Übertragung der Lenkbewegung von der Vorderradlenkung auf die Hinterradlenkung dient eine längsliegende Drehwelle 4, die ein Koppelglied 5 um eine – zumindest annähernd – längsliegende Drehachse verschwenken kann. Das Koppelglied 5 ist in Geradeausstellung der Räder 1, 2 symmetrisch angeordnet und bildet zusammen mit zwei Kurbeln 6 und 7, die am Fahrzeugaufbau 8 (oder einem Hilfsträger) über zwei Gelenke 9 und 10 angelenkt sind ein Doppelkurbelgetriebe 11. Der Abstand der Gelenke 9 und 10 ist geringer als der Abstand der Doppelgelenke 12 und 13 des Koppelgliedes 5. Die Anlenkpunkte 14 am Koppelglied 5 für die Lenkungsbetätigung der Hinterräder 2 liegen etwa im Bereich zwischen den aufbauseitigen Gelenken 9 und 10 der Kurbeln 6 und 7.

Das Koppelglied 5 ist bei dem in der Zeichnung dargestellten Ausführungsbeispiel um eine etwa in Fahrzeuglängsrichtung L verlaufende Drehachse schwenkbar. Es könnte beispielsweise auch um eine vertikale Drehachse schwenkbar sein, wenn es nicht direkt mit einer längsliegenden Drehwelle angetrieben würde. Bei dem dargestellten bevorzugten Ausführungsbeispiel ist die Drehwelle 4 starr mit dem Koppelglied 5 verbunden. Beide können auch einstückig ineinander übergehen.

Wie man erkennt, ist die mit dem Koppelglied 5 verbundene Drehwelle 4 über eine Gelenkkupplung 15, die durch ein Kardangelenk oder auch im wesentlichen durch eine flexible Scheibe gebildet sein kann, mit einem vorderen, am Fahrzeugaufbau 8 gelagerten Drehwellenabschnitt 16 verbunden. Dieser vordere Drehwellenabschnitt 16 ist seinerseits wiederum über einen radialen Hebelarm 17 gelenkig mit einer Stange 18 verbunden, die vom Lenkmechanismus der Vorderräder 1 verlagert wird. Bei dem dargestellten Ausführungsbeispiel erfolgt dies in der Weise, daß die Stange 18 über ein Kugelgelenk 19 an einem Ende der Zahnstange 20 des Zahnstangenlenkgetriebes angreift.

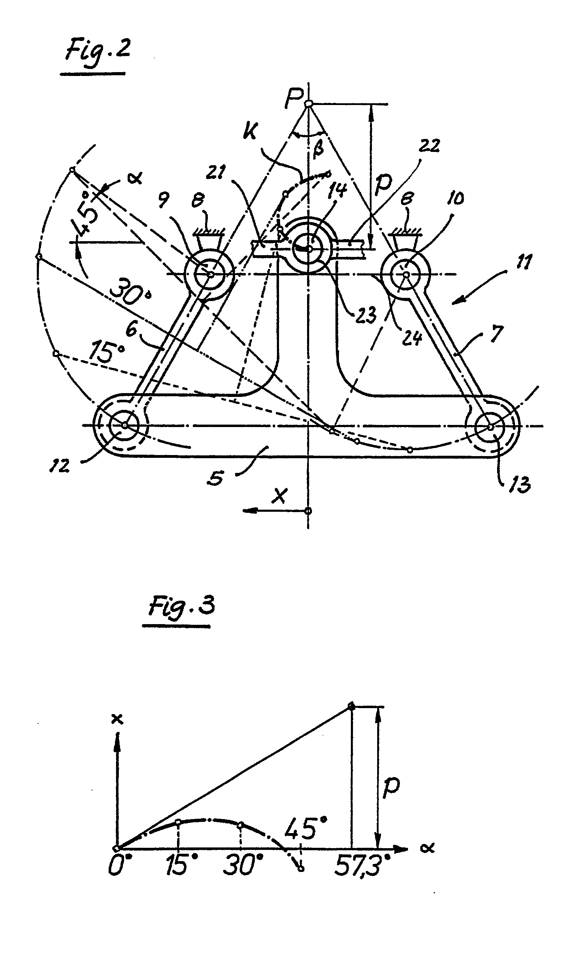

Wie man insbesondere in Fig. 2 erkennt, ist der Abstand der aufbauseitigen Gelenke 9 und 10 der Kurbeln 6 und 7 etwa halb so groß wie der Abstand der Koppelgelenke 12 und 13. Ferner greifen die zur Lenkungsbetätigung der Hinterräder 2 querverlagerbaren Spurstangen 21 und 22 mit einer gemeinsamen Drehachse 23 an dem Koppelglied 5 an. Sie könnten auch unmittelbar nebeneinander an getrennten Gelenkzapfen angelenkt sein. Die gemeinsame Drehachse 23 liegt etwa im Bereich der Verbindungslinie 24 zwischen den beiden aufbauseitigen Gelenken 9 und 10 der beiden Kurbeln 6 und 7.

Beim Anlenken der hinteren Räder 2 aus der Geradeausstellung schwenkt das Koppelglied 5 um den Momentanpol P. Die Bahnkurve K veranschaulicht, welche Lage der Anlenkpunkt 14 bei verschiedenen Schwenklagen des Koppelgliedes einnimmt. Die Fig. 2 deutet verschiedene Schwenklagen (aus der Neutralstellung im Urzeigersinn gedreht) an. Für eine Verschwenkung von 15°, und ebenfalls von 30°, befindet sich der Anlenkpunkt 14 noch links von der Symmetrielinie des Doppelkurbelgetriebes 11. Er wandert aber schon bei einem Schwenkwinkel $\alpha$ = 45° auf die rechte Seite dieser Symmetrielinie, was dann bei dem in Fig. 1 ersichtlichen Gesamtaufbau schon ein gegensinniges Lenken der Hinterräder bedeuten würde. Der Grad der Verschwenkung der Hinterräder kann über die Länge des Hebelarmes 17, insbesondere aber auch über den Polabstand p beeinflußt werden.

Das Diagramm gemäß Fig. 3 zeigt die Querverlagerung x des Anlenkpunktes 14 in Abhängigkeit vom Schwenkwinkel $\alpha$ des Koppelgliedes 5. Der Anfangsgradient der Verschiebung x über dem Drehwinkel $\alpha$ läßt sich sehr einfach aus dem Polabstand p in Geradeausstellung und dem Koppelwinkel $\beta$ konstruieren, der bei der dargestellten Ausführungsform 57,3° beträgt. Aus der Grundstellung heraus verdrehen sich die hinteren Räder 2 zunächst gleichsinnig mit den vorderen Rädern 1. Ab etwa 17° Drehwinkel des Koppelgliedes reduziert sich die Verdrehung der hinteren Räder wieder, die dann ab ungefähr 40° Schwenkwinkel des Koppelgliedes 5 gegensinnig wird. Selbstverständlich ist es im Rahmen der Erfindung auch möglich, auf die bis zum vollen Lenkeinschlag der vorderen Räder 1 zuletzt gegensinnige Verdrehung der hinteren Räder 2 zu verzichten und bei vollem Einschlag der vorderen Räder 1 den Einschlag der hinteren Räder gegen Null gehen zu lassen.

In Fig. 2 ist schließlich noch angedeutet, daß sich die aus der Drehwelle 4 und dem Koppelglied 5 bestehende Baueinheit nicht exakt um eine horizontale längsverlaufende Drehachse verschwenken läßt, sondern um die von dem Pol P zum Mittelpunkt der Gelenkkupplung 15 verlaufende momentane Drehachse M.

## Patentansprüche

1. Hinterradlenkung für Kraftfahrzeuge, mit einem von der Vorderradlenkung betätigten Drehglied mit längsliegender Drehachse, das über einen Lenkmechanismus die lenkbaren hinteren Räder so betätigt, daß sie beim Einschlagen der vorderen Räder aus der Geradeausstellung gleichsinnig zu den vorderen Rädern verschwenkt werden, wobei mit zunehmenden Einschlagwinkel der vorderen Räder der Einschlagwinkel der hinteren Räder zumindest wieder reduziert wird, dadurch gekennzeichnet, daß das Drehglied das Koppelglied (5) eines in Geradeausstellung symmetrisch angeordneten Doppelkurbelgetriebes (11) bildet, dessen Kurbeln (6, 7) am Fahrzeugaufbau (8) oder dgl. über zwei Gelenke (9, 10) angelenkt sind, deren Abstand geringer ist als der Abstand der Koppelgelenke (12, 13) des Koppelgliedes (5), wobei ferner die Anlenkpunkte (14) am Koppelglied (5) für die Lenkungsbetätigung der Hinterräder (2) etwa im Bereich zwischen den aufbauseitigen Gelenken (9, 10) der Kurbeln (6, 7) liegen.

2. Hinterradlenkung nach Anspruch 1, dadurch gekennzeichnet, daß das Koppelglied (5) um eine etwa in Fahrzeuglängsrichtung (L) verlaufende Drehachse schwenkbar ist.

3. Hinterradlenkung nach Anspruch 2, mit einer längsliegenden Drehwelle zur Betätigung des Drehgliedes, dadurch gekennzeichnet, daß die Drehwelle (4) starr mit dem Koppelglied (5) verbunden ist.

4. Hinterradlenkung nach Anspruch 3, dadurch gekennzeichnet, daß die mit dem Koppelglied (5) verbundene Drehwelle (4) über eine Gelenkkupplung (15) mit einem vorderen, am Fahrzeugaufbau (8) gelagerten Drehwellenabschnitt (16) verbunden ist.

5. Hinterradlenkung nach Anspruch 4, dadurch gekennzeichnet, daß der vordere Drehwellenabschnitt (16) über einen radialen Hebelarm (17) gelenkig mit einer Stange (18) verbunden ist, die vom Lenkmechanismus der Vorderräder (1) verlagert wird.

6. Hinterradlenkung nach Anspruch 1, dadurch gekennzeichnet, daß der Abstand der aufbauseitigen Gelenke (9, 10) der Kurbeln (6, 7) etwa halb so groß wie der Abstand der Koppelgelenke (12, 13) ist.

7. Hinterradlenkung nach Anspruch 1, dadurch gekennzeichnet, daß zur Lenkungsbetätigung der Hinterräder (2) zwei Spurstangen (21, 22) vorgesehen sind, die auf einer gemeinsamen Drehachse (23) an dem Koppelglied (5) angreifen.

8. Hinterradlenkung nach Anspruch 7, dadurch gekennzeichnet, daß die gemeinsame Drehachse (23) etwa im Bereich der Verbindungslinie (24) zwischen den aufbauseitigen Gelenken (9, 10) der beiden Kurbeln (6, 7) liegt.

## Claims

1. A rear-wheel steering system for motor vehicles, having a rotating member with a longitudinally-disposed axis of rotation actuated by the front-wheel steering system, which actuates the steerable rear wheels through a steering mechanism so that, on steering of the front wheels out of the straight-ahead position, they are pivoted in the same direction with the front wheels, and with increasing steering angle of the front wheels the steering angle of the rear wheels is at least reduced again, characterised in that the rotating member forms the coupling member (5) of a double crank gearing (11) which is arranged symmetrically in the straight-ahead position, the cranks (6, 7) of which gearing are articulated to the vehicle body (8) or the like through two joints (9, 10), the disance between which is less than the distance between the coupling joints (12, 13) of the coupling member (5), while furthermore the articulation points (14) on the coupling member (5) for the steering actuation of the rear wheels (2) lie approximately in the region between the body joints (9, 10) of the cranks (6, 7).

2. A rear-wheel steering system according to Claim 1, characterised in that the coupling member (5) is pivotable about an axis of rotation extending approximately in the longitudinal direction (L) of the vehicle.

3. A rear-wheel steering system according to Claim 2, having a longitudinally-extending rotating shaft for the actuation of the rotating member, characterised in that the rotating shaft (4) is rigidly connected with the coupling member (5).

4. A rear-wheel steering system according to Claim 3, characterised in that the rotating shaft (4) connected with the coupling member (5) is connected through an articulated joint coupling (15) with a forward rotating shaft section (16) mounted on the vehicle body (8).

5. A rear-wheel steering system according to Claim 4, characterised in that the forward rotating shaft section (16) is connected articulatedly through a radial lever arm (17) with a rod (18) which is displaced by the steering mechanism of the front wheels (1).

6. A rear-wheel steering system according to Claim 1, characterised in that the distance between the body joints (9, 10) of the cranks (6, 7) is about half as great as the distance between the coupling joints (12, 13).

7. A rear-wheel steering system according to Claim 1, characterised in that, for the steering actuation of the rear wheels (2), two track rods (21, 22) are provided which engage on a common axis (23) of rotation with the coupling member (5).

8. A rear-wheel steering system according to Claim 7, characterised in that the common rotation axis (23) lies approximately in the region of the line (24) of connection between the body joints (9, 10) of the two cranks (6, 7).

## Revendications

1. Dispositif de commande de direction pour roues arrières d'un véhicule comprenant un ensemble mobile autour d'un axe dirigé dans le sens de la longueur, actionné par la commande de direction des roues avant et qui par un mécanisme de commande de direction agit sur les roues arrières orientables, de façon que par braquage des roues avant à partir de la position droite, elles subissent une torsion dans le même sens que les roues avant, jusqu'à ce que pour un angle de braquage croissant des roues avant, l'angle de braquage des roues arrières se met au moins à diminuer, il est caractérisé par le fait que l'ensemble mobile constitue l'élément de couplage 5 d'un mécanisme 11 à deux manivelles disposées symétriquement dans la position droite, dont les bielles 6, 7 sont articulées sur la carrosserie du véhicule 8 ou pareillement sur deux articulations 9, 10, dont la distance est plus petite que la distance des articulations couplées 12 et 13 de l'élément de couplage 5, en outre les points d'articulation 14 sur l'élément de couplage 5 pour la commande de direction des roues arrières 2 se trouvent à peu prés dans la zone située entre les articulations fixées à la carrosserie 9, 10 des bielles 6, 7.

2. Dispositif de commande des roues arrières selon la revendication 1, caractérisée en ce que l'élément de couplage 5 peut pivoter autour d'un axe de rotation se développant à peu près dans la direction longitudinale L du véhicule.

3. Dispositif de commande des roues arrières selon la revendication 2, avec un arbre de transmission pour actionner l'élément tournant, caractériséé en ce que l'arbre de transmission 4 est lié rigidement à l'élément de couplage 5.

4. Dispositif de commande des roues arrières selon la revendication 3, caractériséé en ce que l'arbre de transmission 4 lié à l'élément de couplage 5 est relié par un accouplemnent articulé 15 à un tronçon d'arbre de transmission 16 fixé sur la carrosserie du véhicule 8.

5. Dispositif de commande des roues arrières selon la revendication 4, caractériséé en ce que le tronçon avant de l'arbre de transmission 16 est lié par articulation, par l'intermédiaire d'un bras de levier radial 17, à une tige 18 qui est transféré par le mécanisme de commande des roues avant 1.

6. Dispositif de commande des roues arrières selon la revendication 1, caractériséé en ce que la distance des articulations fixées à la carrosserie 9, 10 des bielles 6, 7 est environ la moitié de la distance des articulations couplées 12, 13.

7. Dispositif de commande des roues arrières selon la revendication 1, caractériséé en ce que pour la commande de direction des roues arrières 2 sont prévues deux barres d'accouplement 21, 22, qui sont fixées à l'élément de couplage 5 sur un axe de rotation commun 23.

8. Dispositif de commande des roues arrières selon la revendication 7, caractériséé en ce que l'axe de rotation commun 23 est situé environ dans la zone de la ligne de liaison 24 entre les articulations fixées à la carrosserie 9, 10 des deux bielles 6, 7.

Fig.1

*Fig.2*

*Fig.3*